# EUROPÄISCHE PATENTSCHRIFT

(11) **EP 1 706 703 B1**
(45) Veröffentlichungstag und Bekanntmachung des Hinweises auf die Patenterteilung: **04.11.2009**
(21) Anmeldenummer: 05701011.8
(22) Anmeldetag: 12.01.2005
(51) Int. Cl.: G01B 5/012, G01B 7/012

(54) **MONTAGEEINRICHTUNG FÜR KOORDINATENMESSGERÄT**
MOUNTING DEVICE FOR A COORDINATE MEASURING MACHINE
DISPOSITIF DE MONTAGE POUR UNE MACHINE DE MESURE DE COORDONNÉES

(30) Priorität: 19.01.2004 DE 102004002853
(43) Veröffentlichungstag der Anmeldung: 04.10.2006
(73) Patentinhaber: Carl Zeiss Industrielle Messtechnik GmbH, 73447 Oberkochen (DE)
(72) Erfinder: ENDERLE, Eckhard, 73434 Aalen-Dewangen (DE); HERB, Monika, 73447 Oberkochen (DE)
(74) Vertreter: Brunotte, Joachim Wilhelm Eberhard
(86) Internationale Anmeldenummer: PCT/EP2005/000438
(87) Internationale Veröffentlichungsnummer: WO 2005/068933

(56) Entgegenhaltungen:
- EP-A- 0 523 906
- DE-A1- 19 749 754
- US-A- 5 505 005
- US-A- 6 012 230

## Beschreibung

Die Erfindung betrifft eine Montageeinrichtung zum Montieren einer Sensoreinrichtung an einem Koordinatenmessgerät.

DE 33 20 127 C2 beschreibt ein Koordinatenmessgerät mit einer Wechseleinrichtung zum automatischen Aufnehmen und Ablegen eines Tastelements. Die Wechseleinrichtung weist eine Magnetkombination mit einem Permanentmagneten und einem Elektromagneten auf. Der Permanentmagnet bringt eine für das Halten des Tastelements hohe Haltekraft auf. Zum Ablegen des Tastelements wird von dem Elektromagneten ein zusätzliches Magnetfeld erzeugt, dessen Betrag etwa dem des Permanentmagneten entspricht, dessen Richtung aber entgegengesetzt ist, sodass das resultierende Gesamtfeld nahezu Null wird. Dadurch verschwindet die Haltekraft.

DE 39 22 297 A1 beschreibt eine elektromagnetische Haltevorrichtung aus einem oder mehreren Permanentmagneten und einem Elektromagneten, dessen Feld dem des Permanentmagneten während des Wechselvorganges gleichsinnig bzw. gegensinnig überlagerbar ist und es dabei verstärkt oder neutralisiert. Mit der Haltevorrichtung wird eine hohe Haltekraft erzielt. Während des Betriebes eines Koordinatenmessgerätes wird der von der Haltevorrichtung gehaltene Tastkopf allein durch die Kraft des oder der Permanentmagneten gehalten.

US 6,012,230 beschreibt einen Tastkopf zur Verwendung an einem beweglichen Arm eines Koordinaten-Positionierungsgeräts. Ein Sensormodul ist lösbar mit einem Haltemodul verbindbar. An beiden Modulen ist ein Permanentmagnet angeordnet. Elektrische Kontakte werden zwischen den Modulen über ein paar von federbelasteten elektrischen Kontaktstiften hergestellt. Die Herstellung und das Lösen der Verbindung zwischen den Modulen erfolgt automatisch. Zum Lösen wird eine über Hebelwirkung verstärkte mechanische Kraft aufgebracht.

WO 02/27270 A1 offenbart ein Koordinatenmessgerät mit einer Aufnahme zur automatisch auswechselbaren Befestigung einer Sensorik. An der Aufnahme befinden sich Kontaktflächen zum elektrischen Verbinden der Aufnahme mit einem Teller der Sensorik. Zentral in der Mitte der Aufnahme ist eine elektromagnetisch betriebene Spanneinrichtung vorgesehen. Der Teller weist eine Vielzahl von federnden Kontaktstiften zum elektrischen Kontaktieren der Kontaktflächen und ein ferromagnetisches Bauteil auf. Zum Spannen des Tellers wird die Aufnahme in die Nähe des Tellers bewegt und über die elektromagnetisch betriebene Spanneinrichtung ein so großes Magnetfeld erzeugt, dass das ferromagnetische Bauteil des Tellers angezogen wird.

DE 40 25 829 A1 beschreibt eine Halterung zur auswechselbaren Befestigung eines Taststiftes oder einer Taststiftkombination am Tastkopf einer Koordinatenmessmaschine, bei der eine Spanneinrichtung den Anschlusskörper des Taststiftes in ein seiner Lage eindeutig bestimmendes Lager in einer Aufnahmevorrichtung am Tastkopf zieht. Um zu verhindern, dass bei Ausfall einer Unterdruckversorgung der Spanneinrichtung der Taststift bzw. die Taststiftkombination aus der Aufnahmevorrichtung fallen und eventuell beschädigt werden, können zwischen Aufnahmevorrichtung und Anschlusskörper zusätzliche, selbsttätig wirkende Haftelemente angeordnet sein. Eine Möglichkeit ist, die Haftelemente als mindestens einen Permanentmagneten auszubilden, der mit seiner Magnetkraft die Gewichtskraft des Anschlusskörpers mit dem Taststift bzw. der Taststiftkombination kompensiert. Die Halterung dient der automatischen Montage des Taststiftes. Zum Entnehmen des Taststiftes wird zunächst der Unterdruck in einem Saugnapf abgeschaltet. Dann fährt der Tastkopf mit der Aufnahmevorrichtung zurück. Durch eine leichte Klemmung des Anschlusskörpers oder des Taststiftes im Magazin wird dabei die Verbindung zwischen dem Permanentmagneten und der Aufnahmevorrichtung gelöst.

Die vorgenannten Spannvorrichtungen führen das Aufnehmen und Ablegen eines Tastelements automatisch durch.

Es ist eine Aufgabe der vorliegenden Erfindung, eine Montageeinrichtung zum Montieren einer Sensoreinrichtung an einem Koordinatenmessgerät anzugeben, die eine manuell durchgeführte Montage und/oder Demontage der Sensoreinrichtung erleichtert. Dabei betrifft die Erfindung Sensoreinrichtungen, die über zumindest einen elektrischen Kontakt mit dem Koordinatenmessgerät verbunden werden müssen.

Die beigefügten Patentansprüche definieren den Schnittumfang.

Insbesondere gibt es Schnittstellen zum auswechselbaren Anbringen einer Sensoreinrichtung an einem Koordinatenmessgerät, bei denen das Anbringen und/oder Abnehmen der Sensoreinrichtung manuell durchgeführt wird oder sogar durchgeführt werden muss, etwa weil eine nicht automatisch betätigbare Verriegelung oder Sicherung der Verbindung zwischen dem Koordinatenmessgerät und der Sensoreinrichtung vorhanden ist. Derartige Schnittstellen können deutlich kostengünstiger realisiert werden und dienen im Gegensatz zu den automatischen Spannvorrichtungen z. B. dazu, Sensoreinrichtungen in größeren Zeitabständen gegen andersartige auszuwechseln oder abzunehmen. Auch kann bei Koordinatenmessgeräten außer einer Schnittstelle für die eigentlichen Sensoren alternativ oder zusätzlich eine Schnittstelle für solche Sensoreinrichtungen vorhanden sein, die einen Sensor betreiben (z. B. Ansteuern und/oder Signale des Sensors verarbeiten). Derartige Sensoreinrichtungen sind i. d. R. deutlich schwerer und daher schwieriger zu handhaben als die Sensoren oder Sensorköpfe allein.

Unter einer Sensoreinrichtung wird jegliche Einrichtung verstanden, die einen Sensor für ein Koordinatenmessgerät aufweist, oder die ausgestaltet ist, zumindest einen solchen Sensor zu betreiben. Beispielsweise handelt es sich bei der Sensoreinrichtung um eine Einrichtung, die ausgestaltet ist, einen tastenden Sensor zu betreiben, wobei der Sensor abnehmbar an der Sensoreinrichtung angeordnet werden kann. Derartige Sensoreinrichtungen haben den Vorteil, dass verschiedene Tastköpfe und/oder andere Sensoren auswechselbar an ihr angeordnet werden können. Beispielsweise kann die Sensoreinrichtung ausgestaltet sein, den oder die Sensoren automatisch aufzunehmen und/oder abzulegen. Die Sensoreinrichtung selbst kann in diesem Fall für lange Zeit an dem Koordinatenmessgerät montiert bleiben. Dennoch ist es zweckmäßig, die Möglichkeit zu haben, die Sensoreinrichtung von dem Koordinatenmessgerät abzunehmen.

Es wird eine Montageeinrichtung zum manuellen Montieren einer Sensoreinrichtung an einem Koordinatenmessgerät vorgeschlagen, die ein erstes Verbindungselement aufweist, das an dem Koordinatenmessgerät angeordnet oder anordenbar ist, und die ein zweites Verbindungselement aufweist, das an der Sensoreinrichtung angeordnet oder anordenbar ist,
- wobei die Verbindungselemente in einem montierten Zustand der Sensoreinrichtung miteinander zusammenwirken und eine Verbindung zwischen einem Teil eines Koordinatenmessgeräts und der Sensoreinrichtung bilden,
- wobei eines der Verbindungselemente eine Magneteinrichtung mit zumindest einem Permanentmagneten zur Erzeugung einer Magnetkraft aufweist und das andere Verbindungselement einen durch die Magnetkraft der Magneteinrichtung anziehbaren Körper aufweist und
- wobei durch die Verbindungselemente eine Anschlagsposition definiert ist, in der die Verbindungselemente während einer Montage der Sensoreinrichtung an dem Koordinatenmessgerät einander berühren.

Bei dem Körper kann es sich insbesondere auch um einen Permanentmagneten handeln. Bevorzugt wird jedoch ein Körper aus einem (z. B. ferromagnetischen) Material, das unter dem Einfluss einer äußeren Magnetkraft magnetisierbar ist.

Die erfindungsgemäße Montageeinrichtung hat den Vorteil, dass eine Magnetkraft eines oder mehrerer Permanentmagneten anziehend zwischen den beiden Verbindungselementen wirkt. Die Magnetkraft wird genutzt, um die Montage und/oder Demontage der Sensoreinrichtung an dem Koordinatenmessgerät zu erleichtern. Die Verwendung eines Permanentmagneten ermöglicht eine einfache Konstruktion und/oder einen einfachen Betrieb der Montageeinrichtung. Zumindest die von dem Permanentmagneten oder den Permanentmagneten erzeugte Magnetkraft braucht nicht auf andere Weise, z. B. durch Körperkraft oder durch eine elektromagnetische Einrichtung erzeugt werden.

Die Magnetkraft wirkt in der durch die Verbindungselemente definierten Anschlagsposition derart zwischen den Verbindungselementen, dass ein Beibehalten der Anschlagsposition zumindest erleichtert wird. Weiterhin ist zusätzlich zu der Magneteinrichtung eine Sparmeinrichtung vorgesehen, die ausgestaltet ist, die Sensoreinrichtung während eines Betriebes des Koordinatenmessgeräts stabil an dem Koordinatenmessgerät zu befestigen.

Die Magneteinrichtung braucht daher nicht wie bei den in der Einleitung genannten Druckschriften eine Spannkraft aufzubringen, die einen zuverlässigen Betrieb des Koordinatenmessgeräts garantiert. Typischerweise liegen die Spannkräfte, die die Sensoreinrichtung gegen das Koordinatenmessgerät drücken bei einem Vielfachen der Gewichtskraft der Sensoreinrichtung. Andernfalls könnte es während des Betriebes zu einer Veränderung der relativen Position zwischen der Sensoreinrichtung und dem Teil des Koordinatenmessgeräts kommen, an dem die Sensoreinrichtung befestigt ist. Dies hätte die Folge, dass die Meßergebnisse unbrauchbar sind.

Die Spanneinrichtung ist so ausgestaltet, dass sie während des Betriebes des Koordinatenmessgeräts eine die Magnetkraft übersteigende Haltekraft aufbringt, mit der die beiden Verbindungselemente aneinander gepresst werden.

Bei einer Ausgestaltung der Montageeinrichtung, die damit kombinierbar ist, ist die Montageeinrichtung derart ausgestaltet, dass in einer definierten, für die Montage geeigneten Ausrichtung des ersten Verbindungselements eine der Montage entgegenwirkende Gegenkraft zu überwinden ist, um die Anschlagsposition zu erreichen und/oder beizubehalten. In dieser Ausgestaltung ist die auf den Körper wirkende Magnetkraft in der Anschlagsposition derart bemessen, dass sie höchstens das Zweifache der Gegenkraft beträgt. Insbesondere kann sie nur höchstens das 1,5-fache der Gegenkraft betragen. Bevorzugtermaßen beträgt sie höchstens das 1,1-flache der Gegenkraft.

Durch die Begrenzung der Magnetkraft wird die Montage oder Demontage der Sensoreinrichtung erleichtert. Wird die Montage beispielsweise manuell durchgeführt, wird einerseits auf Grund der Magnetkraft die Gegenkraft überwunden oder zumindest teilweise kompensiert und wird andererseits keine zu große Magnetkraft erzeugt, die zu einem heftigen Anschlagen der u. U. empfindlichen Sensoreinrichtung an dem Koordinatenmessgerät führen könnte oder die die manuelle Handhabung erschwert, weil sie beispielsweise durch Muskelkräfte einer Person ausgeglichen werden muss.

Die auf den Körper wirkende Magnetkraft in der Anschlagsposition beträgt bei einer konkreten Ausführungsform mindestens das 0,5-fache der Gegenkraft und ist bei einer bevorzugten Ausführungsform in der Anschlagsposition mindestens gleich dem Betrag der Gegenkraft. Auf diese Weise wird die Handhabung der Montage insbesondere bei manueller Ausführung ohne Hilfsmittel nahezu mühelos ermöglicht.

Die genannte Gegenkraft kann eine oder mehrere Ursachen haben. Beispielsweise ist es bei Koordinatenmessgeräten in Portalbauweise üblich, die Sensoreinrichtung von unten an eine Pinole des Koordinatenmessgeräts heranzuführen und an der Pinole zu montieren. In diesem Fall muss die gesamte Gewichtskraft der Sensoreinrichtung als Gegenkraft oder Teil der gesamten Gegenkraft aufgebracht werden. Allgemeiner betrachtet kann es je nach Art des Koordinatenmessgeräts eine oder mehrere definierte Ausrichtungen des ersten Verbindungselements geben, sodass die Gewichtskraft der Sensoreinrichtung in der Anschlagsposition ganz oder teilweise kompensiert werden muss.

Bei modernen Sensoreinrichtungen für Koordinatenmessgeräte kann es eine Vielzahl von separaten elektrischen Verbindungen geben, die zwischen dem Koordinatenmessgerät und der Sensoreinrichtung herzustellen sind. Vorzugsweise ist/sind daher ein oder mehrere federnde Kontaktelemente an zumindest einem der Verbindungselemente vorgesehen, die während eines Betriebes des Koordinatenmessgeräts mit zumindest einer Kontaktfläche an dem anderen Verbindungselement zusammenwirken und einen elektrischen Kontakt zwischen den Verbindungselementen bilden. Bei der Montage der Sensoreinrichtung trägt daher eine Federkraft des federnden Kontaktelements bzw. die Federkräfte der federnden Kontaktelemente in der Anschlagsposition zu der Gegenkraft bei oder machen diese aus. Insbesondere bei einer Vielzahl von solchen federnden Kontaktelementen, die außerdem noch vorgespannt sein können, kann die Summe der von den Kontaktelementen ausgeübten Gegenkraft in der gleichen Größenordnung wie die Gewichtskraft der Sensoreinrichtung liegen und die Gewichtskraft sogar übersteigen. Eine Kompensation der insgesamt wirkenden Gegenkraft erleichtert die Montage daher erheblich.

Eine bestimmte Auslegung der Montageeinrichtung betrifft den Fall, dass das oder die federnden Kontaktelemente durch eine Vorspannkraft vorgespannt sind, wobei durch die Verbindungselemente und durch das oder die federnden Kontaktelemente eine Kontaktposition definiert ist, in der das oder die Kontaktelemente während der Montage der Sensoreinrichtung an dem Koordinatenmessgerät die Kontaktfläche(n) (insbesondere erstmalig) mechanisch kontaktieren, sodass lediglich die Vorspannkraft auf die Kontaktfläche(n) ausgeübt wird, nicht jedoch eine zusätzliche durch Auslenkung des oder der Kontaktelemente erzeugte Federkraft. Bei der genannten Auslegung ist die auf den (z. B. ferromagnetischen) Körper wirkende Magnetkraft in der Kontaktposition kleiner als der Betrag der Gegenkraft einschließlich der Vorspannkraft. Diese

Ausführungsform ist insbesondere dann von Vorteil, wenn bei der Montage zunächst die Kontaktposition erreicht wird und dann im Laufe des weiteren Montagevorganges erst die Anschlagsposition erreicht wird. Die Magnetkraft wirkt dann in der Kontaktposition noch nicht so stark, dass die Vorspannkraft unbeabsichtigt überkompensiert wird und die Sensoreinrichtung unkontrolliert in die Anschlagsposition gelangt und somit die beiden Verbindungselemente aneinander schlagen. Vielmehr kann aus der Kontaktposition heraus kontrolliert eine zusätzliche Kompensationskraft zur vollständigen Kompensation der Gegenkraft aufgebracht werden (beispielsweise eine Muskelkraft). Mit weiterem Fortschreiten der Montage kann die Magnetkraft weiter zunehmen, da sich ein Abstand zwischen dem Permanentmagneten oder den Permanentmagneten und dem Körper verringert. Die zusätzliche Kompensationskraft kann in diesem Fall verringert werden.

Bei einer Weiterbildung kann die Montageeinrichtung so ausgelegt sein, dass die Magnetkraft bei fortschreitender Montage zwischen der Kontaktposition und der Anschlagsposition überproportional mit abnehmendem Abstand zwischen dem Permanentmagneten oder den Permanentmagneten einerseits und dem Körper andererseits zunimmt, sodass bis zum Erreichen der Anschlagsposition die (u. U. wegen der Zunahme der Federkräfte der Kontaktelemente zunehmende) Gegenkraft vollständig kompensiert ist.

Die zuvor für die Montage der Sensoreinrichtung wiedergegebenen Überlegungen treffen in entsprechender Weise auch für die Demontage der Sensoreinrichtung zu. Insbesondere ist eine nicht kompensierte Gegenkraft oder zumindest teilweise kompensierte Gegenkraft für eine Person schwer zu handhaben und kann zu der Beschädigung der Sensoreinrichtung führen, wenn diese beispielsweise unkontrolliert an einem Messtisch des Koordinatenmessgeräts anschlägt.

Die Montageeinrichtung ist nicht auf den Fall beschränkt, dass sich in der Anschlagsposition Oberflächen des ersten und des zweiten Verbindungselements gegenüberstehen, wobei die Abstände zumindest in Teilbereichen der Oberflächen konstant sind. Jedoch wird diese Ausgestaltung bevorzugt. Insbesondere kann eines der Verbindungselemente eine Kontaktoberfläche mit einer Mehrzahl von über die Kontaktoberfläche verteilten elektrischen Kontaktflächen aufweisen, wobei die Kontaktoberflächen in der Anschlagsposition parallel zu einer Oberfläche des anderen Verbindungselements mit vorspringenden Kontaktelementen verlaufen.

Die Erleichterung der Montage und/oder Demontage der Sensoreinrichtung ist insbesondere für die im Folgenden beschriebenen Ausführungsformen der Montageeinrichtung von besonderem Vorteil.

Die Montageeinrichtung weist zusätzlich zu der Magneteinrichtung eine Spanneinrichtung auf, wie bereits erwähnt wurde. Wenn die Spanneinrichtung in der Anschlagsposition betätigbar ist, kommt es darauf an, dass gerade in dieser Position zumindest eine teilweise Kompensation der Gegenkraft stattfindet. Insbesondere wenn eine Person eine freie Hand für die Betätigung der Spanneinrichtung benötigt, steht nur noch eine Hand zum Halten der Sensoreinrichtung zur Verfügung.

Entsprechendes gilt für den Fall, dass die Montageeinrichtung eine Sicherungseinrichtung zur Sicherung der Verbindung der Verbindungselemente gegen unbeabsichtigtes Lösen aufweist, wenn die Sicherungseinrichtung in der Anschlagsposition betätigbar ist. Insbesondere kann es sich bei der Sicherungseinrichtung um eine Verriegelung zum Verriegeln der Verbindung handeln.

Vorzugsweise besteht in der Anschlagsposition ein Abstand zwischen dem oder den Permanentmagneten und dem Körper. Bei einer derartigen Ausführungsform einer Montageeinrichtung ist gewährleistet, dass der Körper beim Erreichen der Anschlagsposition nicht an dem Permanentmagneten oder den Permanentmagneten anschlägt. Weiterhin kann über die Einstellung des Abstandes die Magnetkraft verändert werden.

Die Montageeinrichtung kann zumindest zwei verschiedene Sensoreinrichtungen aufweisen, die wahlweise mit dem ersten Verbindungselement verbunden werden können. An den verschiedenen Sensoreinrichtungen ist jeweils eine Ausführungsform des zweiten Verbindungselements vorgesehen. Für die verschiedenen Sensoreinrichtungen ist eine unterschiedlich große Gegenkraft in der jeweiligen Anschlagsposition zu überwinden, um die Anschlagsposition zu erreichen und/oder beizubehalten. Es wird vorgeschlagen, die zweiten Verbindungselemente der Sensoreinrichtungen derart auszugestalten, dass der Abstand zwischen dem Permanentmagneten oder den Permanentmagneten und dem Körper unterschiedlich groß ist, sodass die Magnetkraft in der Anschlagsposition auf diese Weise der unterschiedlich großen Gegenkraft entsprechend angepasst ist.

Wie bereits erwähnt, besteht ein Vorteil der Montageeinrichtung darin, dass die Magnetkraft durch zumindest einen Permanentmagneten erzeugt wird. In einer besonderen Ausgestaltung weist die Magneteinrichtung außer dem Permanentmagneten oder den Permanentmagneten keine weitere Magnetkraftquelle auf, die ausgestaltet ist, die Magnetkraft der Magneteinrichtung in der Anschlagsposition zu beeinflussen. Eine solche Montageeinrichtung kann besonders einfach und kostengünstig ausgestaltet werden und erfordert insbesondere keine Vorrichtung zur Ansteuerung und/oder elektrischen Versorgung eines Elektromagneten.

Insbesondere ist es vorteilhaft, wenn das zweite Verbindungselement den durch die Magnetkraft der Magneteinrichtung anziehbaren Körper aufweist. Dementsprechend wird bevorzugt, dass das Koordinatenmessgerät den oder die Permanentmagneten aufweist. Dies hat den Vorteil, dass verschiedene Sensoreinrichtungen an dem Koordinatenmessgerät montiert werden können, wobei keine der Sensoreinrichtungen einen Permanentmagneten aufweisen muss. Ein (z. B. ferromagnetischer) Körper, der jedoch kein Permanentmagnet ist, ist in der Regel kostengünstiger als ein Permanentmagnet.

Außerdem ist ein Verfahren zum Einstellen einer Montageeinrichtung eines Koordinatenmessgeräts offenbart. Das Verfahren betrifft das Einstellen einer Montageeinrichtung eines Koordinatenmessgeräts, wobei die Montageeinrichtung zum Montieren einer Sensoreinrichtung an dem Koordinatenmessgerät ausgestaltet ist und ein erstes Verbindungselement, das an dem Koordinatenmessgerät angeordnet oder anordenbar ist, und ein zweites Verbindungselement, das an der Sensoreinrichtung angeordnet oder anordenbar ist, aufweist. Die Verbindungselemente wirken in einem montierten Zustand der Sensoreinrichtung miteinander zusammen und bilden eine Verbindung zwischen einem Teil eines Koordinatenmessgeräts und der Sensoreinrichtung. Eines der Verbindungselemente weist eine Magneteinrichtung mit zumindest einem Permanentmagneten zur Erzeugung einer Magnetkraft auf und das andere Verbindungselement weist einen durch die Magnetkraft der Magneteinrichtung anziehbaren Körper auf. Dabei ist durch die Verbindungselemente eine Anschlagsposition definiert, in der die Verbindungselemente während einer Montage der Sensoreinrichtung an dem Koordinatenmessgerät einander berühren. Die Montageeinrichtung ist derart ausgestaltet, dass in einer definierten, für die Montage geeigneten Ausrichtung des ersten Verbindungselements eine der Montage entgegenwirkende Gegenkraft zu überwinden ist, um die Anschlagsposition zu erreichen und/oder beizubehalten. Die Magnetkraft in der Anschlagsposition wird folgendermaßen eingestellt:
(a) Ermitteln der Gegenkraft in der Anschlagsposition,
(b) Ermitteln der Magnetkraft in Abhängigkeit von einem Abstand zwischen dem oder den Permanentmagneten und dem Körper und
(c) Einstellen des Abstandes, sodass die auf den Körper wirkende Magnetkraft in der Anschlagsposition höchstens das Zweifache der Gegenkraft beträgt.

Insbesondere kann zum Einstellen des Abstandes zwischen dem Permanentmagneten und dem Körper in der Anschlagsposition eine Position des Körpers in oder an dem zweiten Verbindungselement eingestellt werden. Dies ermöglicht es, die Position des oder der Permanentmagneten relativ zu dem ersten Verbindungselement konstant zu halten und dennoch die Magnetkraft einstellen zu können. Die Anordnung des Körpers in oder an dem zweiten Verbindungselement hat den bereits genannten Vorteil, dass verschiedene Sensoreinrichtungen bei unterschiedlich eingestellter Magnetkraft mit dem Koordinatenmessgerät kombiniert werden können.

Ein besonders bevorzugtes Ausführungsbeispiel der Erfindung wird nun unter Bezugnahme auf die beigefügte Zeichnung beispielhaft näher erläutert. Die Figuren der Zeichnung sind schematisch zu verstehen. In den Figuren bezeichnen gleiche Bezugszeichen gleiche und/oder funktionsgleiche Teile. Die einzelnen Figuren der Zeichnung zeigen:
- Fig. 1: eine perspektivische Prinzipdarstellung eines Koordinatenmessgerätes (KMG) in Portalbauweise mit einer Sensoreinrichtung, die über eine Montageeinrichtung an einer Pinole des KMG montiert ist;
- Fig. 2: eine vergrößerte Ansicht einer Schnittstelle zwischen einer Sensoreinrichtung und der Pinole des KMG;
- Fig. 3A: eine vergrößerte Teildarstellung eines ersten und eines zweiten Verbindungselements im nicht montierten Zustand eines Sensorelements;
- Fig. 3B: die in Fig. 3A dargestellten Verbindungselemente in einer Anschlagsposition der Verbindungselemente;
- Fig. 4: einen Teil-Querschnitt durch ein an einer Sensoreinrichtung angeordnetes Verbindungselement;
- Fig. 5: eine Ansicht mit Teil-Querschnitt eines an der Pinole eines KMG angeordneten Verbindungselements;
- Fig. 6: eine vereinfachte perspektivische Darstellung des in Fig. 4 dargestellten Verbindungselements;
- Fig. 7: ein Diagramm, das eine bei der Montage einer Sensoreinrichtung zu überwindende Widerstandskraft (Gegenkraft) sowie eine Magnetkraft als Funktionen von Abständen zwischen zwei Verbindungselementen darstellt; und
- Fig. 8: die in Fig. 7 dargestellten Funktionen und eine durch Veränderung eines Abstandes veränderte Funktion, die die Magnetkraft beschreibt.

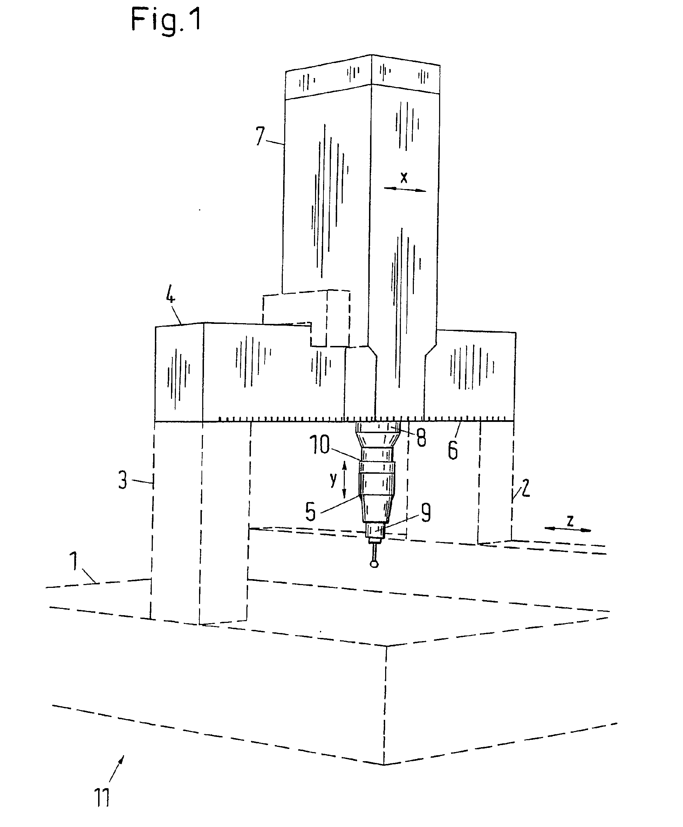

Das in Fig. 1 dargestellte Koordinatenmessgerät (KMG) 11 in Portalbauweise weist einen Messtisch 1 auf, über dem Säulen 2, 3 befestigt sind, die zusammen mit einem Querträger 4 ein Portal des KMG 11 bilden. Der Querträger 4 ist an seinen gegenüberliegenden Enden mit den Säulen 2 bzw. 3 verbunden, die auf dem Messtisch 1 längsverschieblich gelagert sind.

Der Querträger 4 ist mit einem Querschlitten 7 kombiniert, welcher luftgelagert entlang dem Querträger 4 beweglich ist. Die momentane Position des Querschlittens 7 relativ zu dem Querträger 4 kann anhand einer Maßstabsteilung 6 festgestellt werden. An dem Querschlitten 7 ist eine in vertikaler Richtung bewegliche Pinole 8 gelagert, die an ihrem unteren Ende über eine Montageeinrichtung 10 mit einer Sensoreinrichtung 5 verbunden ist. An der Sensoreinrichtung 5 ist ein Tastkopf 9 abnehmbar angeordnet.

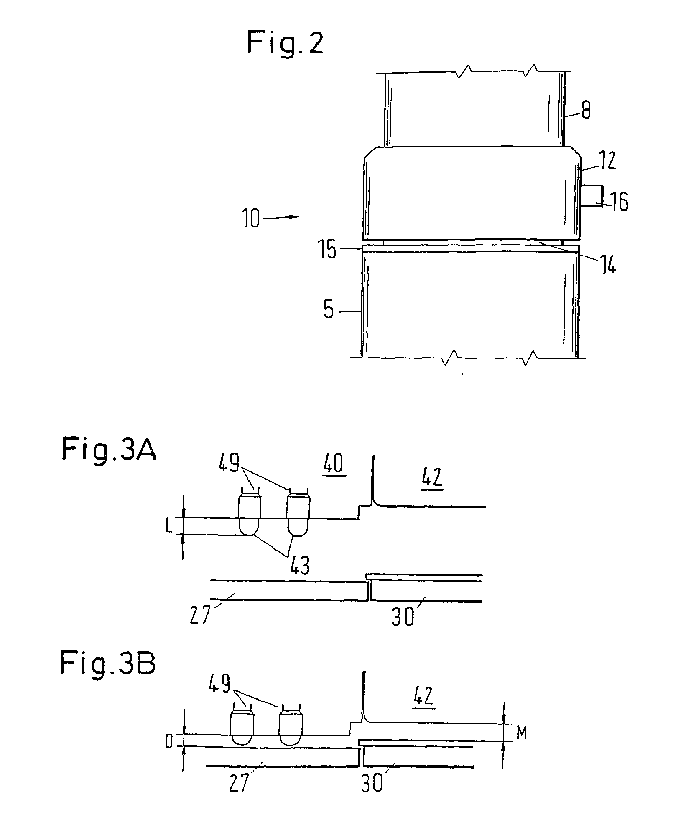

Fig. 2 zeigt eine Ansicht eines Endabschnitts der Sensoreinrichtung 5, der über die Montageeinrichtung 10 an der Pinole 8 montiert ist. Die Montageeinrichtung 10 weist ein erstes (oberes) Verbindungselement 12 und ein zweites (unteres) Verbindungselement 14 auf, das mit einer Grundplatte 15 an der Sensoreinrichtung 5 befestigt ist. Die Montageeinrichtung 10 weist außerdem eine Verriegelungseinrichtung auf, von der in Fig. 2 ein Verriegelungshebel 16 dargestellt ist. In dem gezeigten Zustand der Montageeinrichtung 10 befinden sich die Verbindungselemente 12, 14 zwar in der für einen Betrieb der Sensoreinrichtung 5 geeigneten Relativposition, die Verriegelung ist jedoch nicht wirksam. In dieser Relativposition kann nun der Verriegelungshebel 16 betätigt werden, sodass die Verriegelung wirksam wird. Wie noch näher beschrieben wird, befinden sich die Verbindungselemente 12, 14 dabei in einer Anschlagsposition, in der sie einander berühren und in der über elektrische Kontakte eine Mehrzahl von elektrischen Verbindungen zwischen ihnen hergestellt ist.

Fig. 3A zeigt Details einer bevorzugten Ausführungsform einer Montageeinrichtung. Im oberen Figurenteil ist ein Permanentmagnet 42 eines ersten Verbindungselements dargestellt. Seine in der Darstellung nach unten gerichtete Oberfläche ist gegenüber der ebenfalls nach unten gerichteten Oberfläche eines benachbarten Trägers 40 (links von dem Permanentmagneten 42) des ersten Verbindungselements zurückspringend angeordnet. Über die Oberfläche des Trägers 40 hinaus ragen Enden 43 von federbelasteten Kontaktstiften 49, die der elektrischen Kontaktierung dienen. An dem unten in Fig. 3A dargestellten zweiten Verbindungselement der Montageeinrichtung befindet sich eine Kontaktplatine 27 mit nicht näher dargestellten Kontaktflächen, über die der elektrische Kontakt zwischen den Verbindungselementen hergestellt werden kann. Weiterhin weist das zweite Verbindungselement einen Anker 30 aus nicht permanentmagnetischem, jedoch unter dem Einfluss des Permanentmagneten 42 magnetisierbaren Materials auf Die Enden der vorgespannten Kontaktstifte ragen aus der Oberfläche des Trägers 40 um eine Länge L heraus. Die Oberfläche des Ankers 30 ragt über die Oberfläche der Kontaktplatine 27 hinaus.

In Fig. 3B ist der Zustand der Montageeinrichtung in einer Anschlagsposition der Verbindungselemente dargestellt. Die Verbindungselemente berühren sich in Bereichen, die nicht in Fig. 3A und 3B dargestellt sind, sodass keine weitere Annäherung der Verbindungselemente möglich oder vorgesehen ist. In der Anschlagsposition sind die Enden 43 der Kontaktstifte 49 näher an der Oberfläche des Trägers 40 positioniert. Sie ragen noch um den Betrag des Abstandes D zwischen dem Träger 40 und der Kontaktplatine 27 aus der Oberfläche des Trägers 40 heraus. Um die Kontaktstifte 49 in diese Position zu bringen, ist jeweils eine Federkraft zu überwinden, die das Ende 43 des Kontaktstiftes 49 im kontaktlosen Zustand in der in Fig. 3A gezeigten Position maximaler Länge L hält.

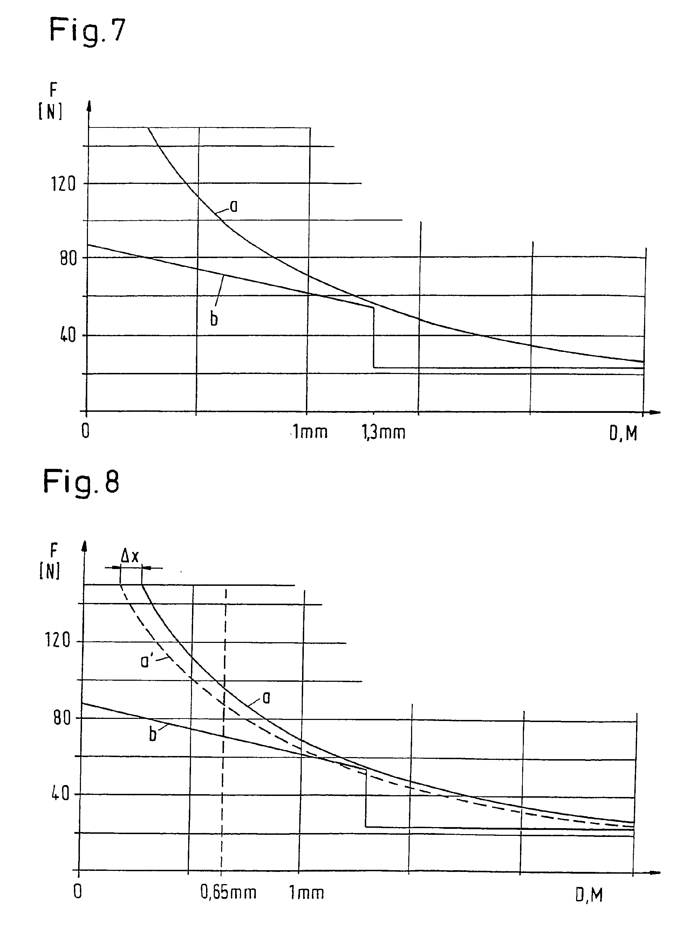

Da die Kontaktstifte 49 vorgespannt sind, ist (bei erstmaligem Kontakt während der Montage) zunächst die Summe der Vorspannkräfte und dann zusätzlich die Summe der zur Verkürzung der Länge L erforderlichen Federkräfte zu überwinden. Die Summe der Kräfte F ist in Fig. 7 für einen konkreten Fall als Funktion des Abstandes D zwischen der Oberfläche des Trägers 40 und der Oberfläche der Kontaktplatine 27 dargestellt (Funktion b). Der erste Kontakt wird in dem Fall bei einem Abstand D von 1,3 mm erreicht.

Wie aus Fig. 3B erkennbar ist, sind der Abstand D sowie der Abstand M zwischen dem Permanentmagneten 42 und dem Anker 30 in der Anschlagsposition unterschiedlich groß. Die entsprechenden Zwischenräume sind insbesondere mit Luft gefüllt. Es kann sich aber alternativ z. B. auf der Oberfläche des Permanentmagneten eine nicht magnetisierte Schicht befinden, deren Dicke zum Abstand M beiträgt. Der Abstand D und der Abstand M sind in der Regel nicht gleich groß. Vielmehr werden der Abstand M und damit die auf den Anker 30 wirkende Magnetkraft vorzugsweise individuell für das zweite Verbindungselement eingestellt, z. B. abhängig von der in der Anschlagsposition insgesamt zu erwartenden Gegenkraft (hier: die Summe der Federkräfte zuzüglich etwaiger anderer Gegenkräfte, z. B. der Gewichtskraft der Sensoreinrichtung 5). Hierzu kann z. B. der Anker 30 in einer entsprechenden Position relativ zu der Kontaktplatine 27 befestigt werden (z. B. geklebt werden). Dies erfolgt beispielsweise einmalig bei der Herstellung der Sensoreinrichtung oder des zweiten Verbindungselements. Die Position kann jedoch auch, insbesondere durch eine Justiereinrichtung, nachträglich verändert werden.

In Fig. 7 ist die von dem Permanentmagneten 42 auf den Anker 30 ausgeübte anziehend wirkende Magnetkraft als Funktion des Abstandes M dargestellt (Funktion a). Die Darstellung entspricht wiederum einem konkreten Fall. Auf eine mögliche Optimierung des Abstandes M wird später noch eingegangen.

Es ist auf die Möglichkeit der Einstellung des Abstandes M hingewiesen worden. Allgemeiner betrachtet kommt es für eine Kompensation von Gegenkräfte bei der Montage und Demontage auf das Verhältnis oder die Differenz der Gegenkräfte und der Magnetkraft an. Es ist daher alternativ oder zusätzlich möglich, die Gegenkräfte in der Anschlagsposition einzustellen bzw. zu verändern, etwa durch eine andere Ausrichtung des Koordinatenmessgerätes, die eine Veränderung der zu den Gegenkräften beitragenden Gewichtskraft bewirkt, und/oder durch eine Veränderung der Federkräfte der Kontaktstifte (oder alternativer Kontaktelemente). Weiterhin kann die Anschlagsposition selbst verändert werden. In der Praxis erscheint es jedoch am zweckmäßigsten, den Abstand M einzustellen. Auch kann es Vorgaben für die Anschlagsposition und/oder die Federkräfte geben, die deren Einstellung nicht oder nur eingeschränkt erlaubt bzw. erlauben.

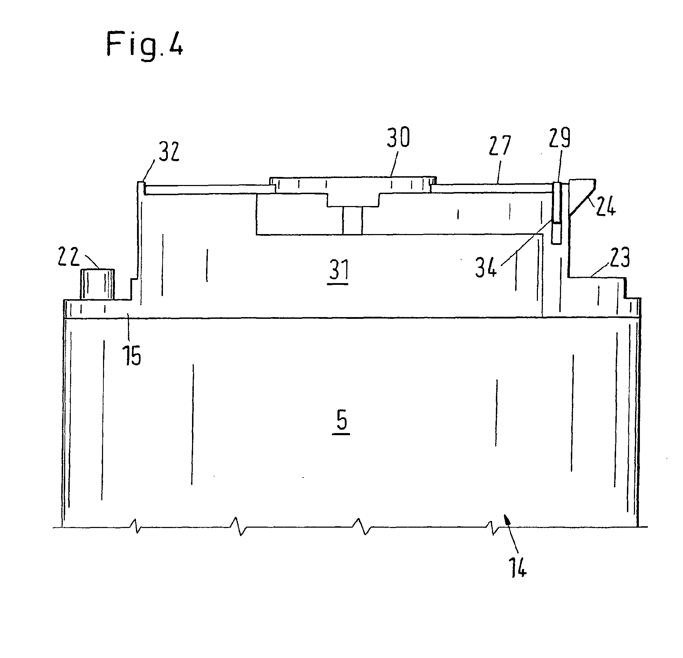

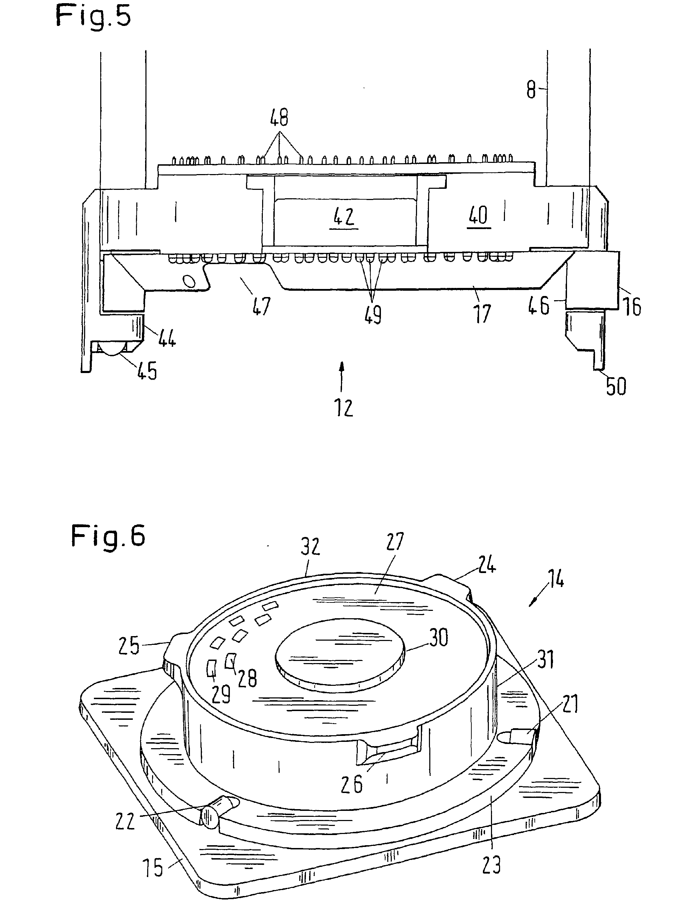

Fig. 4 bis Fig. 6 zeigen eine besonders bevorzugte Ausführungsform einer Montageeinrichtung, die insbesondere der in Fig. 2 und/oder der in Fig. 3A und Fig. 3B gezeigten Montageeinrichtung gleicht. Das in Fig. 4 und Fig. 6 dargestellte zweite Verbindungselement kann (wie aus Fig. 4 entnehmbar) an einer Sensoreinrichtung 5 befestigt sein. Es weist eine Grundplatte 15 mit einer ringförmigen Erhebung 23, ein daran ansetzendes zylindrisches Gehäuse 31, eine kreisringförmige Kontaktplatine 27 und eine kreisförmige Ankerscheibe 30 auf. Die Erhebung 23 hat drei gleichmäßig über ihren ringförmigen Umfang verteilte Aussparungen, in denen jeweils ein liegend angeordneter Zylinder 21, 22 aus Hartmetall angeordnet ist. Die Zylinder wirken im montierten Zustand mit Kugelpaaren 45 an einem ersten Verbindungselement 12 zusammen, sodass eine exakte und reproduzierbare Relativposition des ersten 12 und des zweiten 14 Verbindungselements erzielt wird.

Am oberen Ende des zylindrischen Gehäuses 31 befindet sich eine Kontaktplatine 27 mit einer Vielzahl von Kontaktflächen, von denen zwei beispielhaft mit den Bezugszeichen 28 und 29 bezeichnet sind. Es können sich weitere Kontaktflächen an der Kontaktplatine 27 befinden, die beispielsweise entlang von um die Ankerscheibe 30 herum verlaufenden Kreislinien ausgerichtet sind. Ein ringförmiger Rand 32 des Gehäuses 31 ragt über das Oberflächenniveau der Kontaktplatine 27 hinaus. Auch die Oberfläche des Ankers 30, der konzentrisch in der Mitte der Kontaktplatine 27 angeordnet ist, ragt über das Oberflächeniveau der Kontaktplatine 27 hinaus.

Am Außenumfang des Gehäuses 31 sind gleichmäßig über den Umfang verteilt drei Vorsprünge 24, 25, 26 angeordnet, wobei die Vorsprünge sich bis zu dem Niveau des ringförmigen Randes 32 erstrecken. Die Vorsprünge 24, 25, 26 sind dazu ausgestaltet, in jeweils eine entsprechende Ausnehmung 47 an dem ersten Verbindungselement 12 bei der Montage eingeführt zu werden.

Wie erwähnt wirken die Zylinder 21, 22 im montierten Zustand mit den Kugelpaaren 45 zusammen. Durch die Zylinder 21, 22 und die Kugelpaare 45 ist auch die Anschlagsposition definiert, die bei der Montage erreicht wird. Mit anderen Worten: die Verbindungselemente 12, 14 werden bei der Montage solange einander angenähert, bis bei Erreichen der durch die Zylinder 21, 22 und die Kugelpaare 45 definierten Anschlagsposition keine weitere Annäherung der Verbindungselemente 12, 14 mehr möglich ist. Anschließend kann in der Anschlagsposition eine Spanneinrichtung betätigt werden, um die Verbindungselemente 12, 14 aneinander festzuspannen. Die Spanneinrichtung weist einen Klemmring 17 auf, der über einen Hebel 16 um die senkrecht zu den einander gegenüberstehenden Oberflächen der Verbindungselemente 12, 14 verlaufende Mittelachse gedreht werden kann, sodass die Klemmwirkung bzw. Spannwirkung entsteht. Bei der Demontage wird die Spanneinrichtung wiederum durch Drehen des Klemmrings 17 gelöst. Weiterhin kann - beispielsweise von der Außenseite des Hebels 16 zugänglich - eine Verriegelungseinrichtung zum Verriegeln der

Spanneinrichtung im gespannten Zustand vorgesehen sein. Beispielsweise weist diese Verriegelungseinrichtung eine Schraube auf, die zum Verriegeln festgezogen wird.

Fig. 5 zeigt an der bei der Montage in Richtung des anderen Verbindungselements weisenden Seite eine Unterkante 50 eines vorstehenden Randes, die im montierten Zustand dicht über der Oberfläche der Grundplatte 15 angeordnet ist. Weiterhin ist gegenüber der Unterkante 50 zurückspringend eines der Kugelpaare 45 dargestellt, die von einer ringförmigen Umfassung 44 gehalten werden. Die ringförmige Umfassung 44 umfasst im montierten Zustand das Gehäuse 31. Ferner weist das erste Verbindungselement 12 einen im Wesentlichen kreisringförmigen Träger 40 auf, in dessen Ringmitte ein Permanentmagnet 42 befestigt ist. An der Unterseite des Trägers 40 ragen entsprechend der Anordnung der Kontaktflächen 28, 29 an der Kontaktplatine 27 Enden von vorgespannten federnden elektrischen Kontaktstiften 49 heraus. An der gegenüberliegenden Seite des Trägers 40 befinden sich entsprechende elektrische Anschlüsse 48 zum elektrischen Anschließen der Kontaktstifte 49. Das Verbindungselement 12 ist an einer Pinole 8 eines Koordinatenmessgerätes befestigt.

Zur Montage der Verbindungselemente 12, 14, die beispielsweise in einer senkrecht nach unten gerichteten Ausrichtung des ersten Verbindungselements 12 erfolgen kann, wird zunächst das zweite Verbindungselement 14 mit seinen Vorsprüngen 24, 25, 26 in die Ausnehmung 47 des ersten Verbindungselements 12 eingeführt, sodass die Enden der Kontaktstifte 49 die Kontaktflächen 28, 29 kontaktieren. Die Montage des zweiten Verbindungselements 14 wird weiter fortgesetzt, wodurch sich die Kontaktplatine 27 noch weiter der Oberfläche des Trägers 40 annähert. Dabei müssen die Vorspannkräfte und die Auslenkungskräfte der Kontaktstifte 49 überwunden werden. Es wird dabei beispielsweise eine Anschlagsposition erreicht, wie sie in Fig. 3 dargestellt ist. In der Anschlagsposition wird über den Hebel 16 der Klemmring 17 verdreht, sodass eine die Gewichtskraft der Sensoreinrichtung (welche an dem zweiten Verbindungselement 14 befestigt ist) um ein Vielfaches übersteigende Spannkraft erzeugt wird. Dieser Zustand kann durch die Betätigung einer Verriegelungseinrichtung gesichert werden.

Es wird nun unter erneuter Bezugnahme auf Fig. 7 und Fig. 8 anhand einer konkreten Ausführungsform einer Montageeinrichtung beschrieben, wie eine die Montage erleichternde Magnetkraft eingestellt werden kann. Bei der Montageeinrichtung kann es sich beispielsweise um die anhand von Fig. 1 bis Fig. 6 beschriebene Ausführungsform handeln.

Das erste Verbindungselement ist wiederum senkrecht nach unten orientiert, sodass bei der Montage die Gewichtskraft der Sensoreinrichtung (inklusive des zweiten Verbindungselements) überwunden werden muss. Beispielsweise beträgt die gesamte zu überwindende Gewichtskraft 23 N. Bei der Montage bleibt diese Gegenkraft zunächst konstant, während die anziehende Magnetkraft mit abnehmendem Abstand der beiden Verbindungselemente überproportional zunimmt.

Das erste Verbindungselement weist eine Vielzahl (z. B. 76) vorgespannte federnde Kontaktelemente auf. Jedes einzelne der Kontaktelemente ist mit einer Vorspannkraft von 0,4 N vorgespannt. Dies ergibt beispielsweise eine Summe von 76 multipliziert mit 0,4 N gleich 30,4 N. Diese Vorspannkraft muss zusätzlich zu der Gewichtskraft (wie in Fig. 7 dargestellt) ab der Montageposition überwunden werden, in der die Kontaktelemente an entsprechenden Kontaktflächen des zweiten Verbindungselement anstoßen (Kontaktposition). Dies ist beispielsweise bei einem Abstand D von 1,3 mm der Fall (Fig. 7). Um die Anschlagsposition zu erreichen, müssen die Kontaktelemente entgegen den Federkräften ausgelenkt werden, sodass noch eine zusätzliche Kraft von beispielsweise 17,1 N bis zur Anschlagsposition hinzukommt, die insbesondere linear ansteigen kann.

Es ist nun zunächst eine Kombination mit zumindest einem Permanentmagneten und einem entsprechenden durch eine Magnetkraft anziehbaren Körper zu wählen, die bei Berührung des oder der Permanentmagneten und des Körpers eine ausreichend große Anziehungskraft des ersten und des zweiten Verbindungselement bewirken würde, um die gewünschte Kompensation der zu überwindenden Kräfte zu erzielen. Insbesondere soll die dieser (hypothetischen) Relativposition des oder der Magneten und des Körpers entsprechende maximale Anziehungskraft in der Anschlagsposition größer sein können als die maximal zu erwartende Gegenkraft. Ein solcher Fall ist in Fig. 7 und in Fig. 8 dargestellt.

Die in Fig. 7 mit ununterbrochenen Linien dargestellten Funktionen a und b betreffen keinen konkreten Fall einer Montageeinrichtung, bei der der Abstand D zwischen den für die federnden Kontaktelemente relevanten Oberflächen und der Abstand M zwischen dem oder den Permanentmagneten einerseits und dem Körper andererseits gleich groß wäre. Vielmehr dient die Darstellung zur Veranschaulichung, wie die Magnetkraft eingestellt werden kann. Zum Einstellen der Magnetkraft kann nun die Funktion a bzw. die entsprechende Kurve entlang der waagerechten Koordinatenachse verschoben werden, sodass die Magnetkraft an einer Stelle des auf der waagerechten Achse aufgetragenen Abstandes D einem gewünschten Wert entspricht. Insbesondere wird die Magnetkraft so eingestellt, dass sie in der Anschlagsposition das einfache bis 1,1-fache der Gegenkraft beträgt. Ein Beispiel für eine um die Länge Δx verschobene Kurve ist mit einer unterbrochenen Linie in Fig. 8 dargestellt, die mit dem Bezugszeichen a' bezeichnet ist. Aus der Verschiebung ergibt sich, um welchen Betrag sich der Abstand M zwischen den oder dem Permanentmagneten einerseits und dem Körper andererseits von dem Abstand D unterscheiden muss, damit bei einer konkreten Ausführungsform einer Montageeinrichtung die gewünschte Kompensation der Gegenkraft erzielt wird.

Für den durch die in Fig. 8 gezeigten Linien bzw. Funktionen a' und b dargestellten Auslegungsfall ist die Summe der Gegenkräfte in der Kontaktposition nur annähernd durch die Magnetkraft kompensiert. Mit weiterer Annäherung der Verbindungselemente nimmt die Magnetkraft jedoch überproportional zu und übersteigt noch vor dem Erreichen der Anschlagsposition (bei D = 0,65 mm in dem dargestellten Beispiel) die ebenfalls zunehmende Gegenkraft. In der Anschlagsposition wird die Sensoreinrichtung daher durch die Magnetkraft gehalten und eine montierende Person kann beispielsweise die Spanneinrichtung und/oder die Verriegelungseinrichtung betätigen, ohne die Gegenkraft kompensieren zu müssen.

## Patentansprüche

1. Montageeinrichtung (10), zum Montieren einer Sensoreinrichtung (5) an einem Kordinatenmessgerät (11), wobei die Montageeinrichtung ein erstes Verbindungselement (12) zur Anordnung an dem Koordinatenmessgerät (11) aufweist, und ein zweites Verbindungselement (14) zur Anordnung an der Sensoreinrichtung (5) aufweist,
- wobei die Verbindungselemente (12, 14) in einem montierten Zustand der Sensoreinrichtung (5) miteinander zusammenwirken und eine Verbindung zwischen einem Teil (8) eines Koordinatenmessgeräts (11) und der Sensoreinrichtung (5) bilden,
- wobei eines der Verbindungselemente (12) eine Magneteinrichtung (40) mit zumindest einem Permanentmagneten (42) zur Erzeugung einer Magnetkraft aufweist und das andere Verbindungselement (14) einen durch die Magnetkraft der Magneteinrichtung (40) anziehbaren Körper (30) aufweist,
- wobei durch die Verbindungselemente (12,14) eine Anschlagsposition definiert ist, in der die Verbindungselemente (12, 14) während einer Montage der Sensoreinrichtung (5) an dem Koordinatenmessgerät (11) einander berühren und in der die Magnetkraft des Permanentmagneten (42) oder der Permanentmagneten derart zwischen den Verbindungselementen (12, 14) wirkt, dass ein Beibehalten der Anschlagsposition zumindest erleichtert wird,
- wobei zumindest eines der Verbindungselemente (12) ein oder mehrere federnde Kontaktelemente (49) aufweist, die während eines Betriebes des Koordinatenmessgeräts (11) mit zumindest einer Kontaktfläche (28) an dem anderen Verbindungselement (14) zusammenwirken und einen elektrischen Kontakt zwischen den Verbindungselementen (12, 14) bilden, und wobei eine Federkraft des oder der federnden Kontaktelemente (49) zumindest einen Teil einer der Montage entgegenwirkenden Gegenkraft bildet, die zu überwinden ist, um die Anschlagsposition zu erreichen und/oder beizubehalten,
**dadurch gekennzeichnet, dass**
- die Montageeinrichtung einem manuellen Montieren der Sensoreinrichtung (5) an dem Koordinatenmessgerät (11) dient und
- die Montageeindchtung zusätzlich zu der Magneteinrichtung eine Spanneinrichtung (24, 25, 26, 46) aufweist, die ausgestaltet ist, die Sensoreinrichtung (5) während eines Betriebes des Koordinatenmessgeräts (11) stabil an dem Koordinatenmessgerät (11) zu befestigen,
wobei die Spanneinrichtung (24, 25, 26, 46) ausgestaltet ist, während des Betriebes des Koordinatenmessgeräts (11) eine die Magnetkraft übersteigende Haltekraft aufzubringen, mit der die beiden Verbindungselemente (12, 14) aneinander gepresst werden.

2. Montageeinrichtung nach Anspruch 1, wobei das oder die federnden Kontaktelemente (49) durch eine Vorspannkraft vorgespannt sind, wobei durch die Verbindungselemente (12, 14) und durch das oder die federnden Kontaktelemente (49) eine Kontaktposition definiert ist, in der das oder die Kontaktelemente (49) während der Montage der Sensoreinrichtung (5) an dem Koordinatenmessgerät (11) die Kontaktfläche(n) (28) mechanisch kontaktieren, sodass lediglich die Vorspannkraft auf die Kontaktfläche(n) (28) ausgeübt wird, nicht jedoch eine zusätzliche durch Auslenkung des oder der Kontaktelemente (49) erzeugte Federkraft, und wobei die auf den Körper (30) wirkende Magnetkraft in der Kontaktposition kleiner als der Betrag der Gegenkraft einschließlich der Vorspannkraft ist.

3. Montageeinrichtung nach einem der Ansprüche 1 bis 2,
- wobei die Montageeinrichtung derart ausgestaltet ist, dass in einer definierten, für die Montage geeigneten Ausrichtung des ersten Verbindungselements (12) die der Montage entgegenwirkende Gegenkraft zu überwinden ist, um die Anschlagsposition zu erreichen und/oder beizubehalten,
- wobei die auf den Körper (30) wirkende Magnetkraft in der Anschlagsposition höchstens das Zweifache der Gegenkraft beträgt.

4. Montageeinrichtung nach Anspruch 3, wobei die auf den Körper (30) wirkende Magnetkraft in der Anschlagsposition höchstens das 1,5-fache der Gegenkraft beträgt, vorzugsweise höchstens das 1,1-fache der Gegenkraft beträgt.

5. Montageeinrichtung nach Anspruch 3 oder 4, wobei die auf den Körper (30) wirkende Magnetkraft in der Anschlagsposition mindestens das 0,5-fache der Gegenkraft beträgt, vorzugsweise mindestens gleich dem Betrag der Gegenkraft ist.

6. Montageeinrichtung nach einem der Ansprüche 3 bis 5, wobei bei der definierten Ausrichtung des ersten Verbindungselements (12) die Gewichtskraft des zweiten Verbindungselements (14) und der damit verbundenen Sensoreinrichtung (5) zumindest einen Teil der Gegenkraft bildet.

7. Montageeinrichtung nach einem der Ansprüche 3 bis 6, wobei das oder die federnden Kontaktelemente (49) durch eine Vorspannkraft vorgespannt sind, wobei durch die Verbindungselemente (12, 14) und durch das oder die federnden Kontaktelemente (49) eine Kontaktposition definiert ist, in der das oder die Kontaktelemente (49) während der Montage der Sensoreinrichtung (5) an dem Koordinatenmessgerät (11) die Kontaktfläche(n) (28) mechanisch kontaktieren, sodass lediglich die Vorspannkraft auf die Kontaktfläche(n) (28) ausgeübt wird, nicht jedoch eine zusätzliche durch Auslenkung des oder der Kontaktelemente (49) erzeugte Federkraft, und wobei die auf den Körper (30) wirkende Magnetkraft in der Kontaktposition kleiner als der Betrag der Gegenkraft einschließlich der Vorspannkraft ist.

8. Montageeinrichtung nach einem der Ansprüche 3 bis 7, wobei die Spanneinrichtung (24, 25, 26, 46) in der Anschlagsposition betätigbar ist.

9. Montageeinrichtung nach einem der Ansprüche 1 bis 8, wobei die Montageeinrichtung eine Sicherungseinrichtung (16) zur Sicherung der Verbindung der Verbindungselemente (12, 14) gegen unbeabsichtigtes Lösen aufweist, insbesondere eine Verriegelung, und wobei die Sicherungseinrichtung (16) in der Anschlagsposition betätigbar ist.

10. Montageeinrichtung nach einem der Ansprüche 1 bis 9, wobei in der Anschlagsposition ein Abstand zwischen dem oder den Permanentmagneten (42) und dem Körper (30) besteht.

11. Montageeinrichtung nach dem vorhergehenden Anspruch mit zumindest zwei verschiedenen Sensoreinrichtungen (5), die wahlweise mit dem ersten Verbindungselement (12) verbunden werden können, an denen jeweils eine Ausführungsform des zweiten Verbindungselements (14) vorgesehen ist und für die in der jeweiligen Anschlagsposition eine unterschiedlich große Gegenkraft zu überwinden ist, um die Anschlagsposition zu erreichen und/oder beizubehalten, wobei die zweiten Verbindungselemente (14) der Sensoreinrichtungen (5) derart ausgestaltet sind, dass der Abstand zwischen dem oder den Permanentmagneten (42) und dem Körper (30) unterschiedlich groß ist, sodass die Magnetkraft in der Anschlagsposition auf diese Weise der unterschiedlich großen Gegenkraft entsprechend angepasst ist.

12. Montageeinrichtung nach einem der Ansprüche 1 bis 11, wobei die Magneteinrichtung (40) außer dem Permanentmagneten (42) oder den Permanentmagneten keine weitere Magnetkraftquelle aufweist, die ausgestaltet ist, die Magnetkraft der Magneteinrichtung (40) in der Anschlagsposition zu beeinflussen.

## Claims

1. Mounting device (10) for mounting a sensor device (5) on a coordinate measuring machine (11), wherein the mounting device has a first connecting element (12) for arranging on the coordinate measuring machine (11), and a second connecting element (14) for arranging on the sensor device (5),
- the connecting elements (12, 14) cooperating with one another in a mounted state of the sensor device (5) and forming a connection between a part (8) of a coordinate measuring machine (11) and the sensor device (5),
- one of the connecting elements (12) having a magnetic device (40) with at least one permanent magnet (42) for generating a magnetic force, and the other connecting element (14) having a body (30) that can be attracted by the magnetic force of the magnetic device (40),
- the connecting elements (12, 14) defining a stop position in which the connecting elements (12, 14) touch one another during mounting of the sensor device (5) on the coordinate measuring machine (11), and in which the magnetic force of the permanent magnet (42) or of the permanent magnets acts between the connecting elements (12, 14) in such a way as to at least facilitate a retention of the stop position,
- at least one of the connecting elements (12) having one or more resilient contact elements (49) which cooperate with at least one contact surface (28) on the other connecting element (14) during an operation of the coordinate measuring machine (11), and form an electric contact between the connecting elements (12, 14), and
- a spring force of the resilient contact element(s) (49) forming at least a fraction of a counterforce which opposes the mounting and is to be overcome in order to reach and/or retain the stop position,
**characterized in that**
- the mounting device serves for manual mounting of the sensor device (5) on the coordinate measuring machine (11), and
- in addition to the magnetic device, the mounting device has a clamping device (24, 25, 26, 46) that is designed to fasten the sensor device (5) stably on the coordinate measuring machine (11) during an operation of the coordinate measuring machine (11), the clamping device (24, 25, 26, 46) being designed to apply during the operation of the coordinate measuring machine (11) a holding force which exceeds the magnetic force and with the aid of which the two connecting elements (12, 14) are pressed against one another.

2. Mounting device according to Claim 1, in which the resilient contact element(s) (49) are prestressed by a prestressing force, wherein the connecting elements (12, 14) and the resilient contact element(s) (49) define a contact position in which the contact element(s) (49) make mechanical contact with the contact surface(s) (28) during the mounting of the sensor device (5) on the coordinate measuring machine (11), such that only the prestressing force is exerted on the contact surface(s) (28), but not an additional spring force produced by deflection of the contact element(s) (49), and wherein the magnetic force acting on the body (30) is smaller in the contact position than the absolute value of the counterforce including the prestressing force.

3. Mounting device according to one of Claims 1 to 2,
- wherein the mounting device is designed in such a way that, in a defined alignment, suitable for the mounting, of the first connecting element (12), the counterforce opposing the mounting is to be overcome in order to reach and/or retain the stop position, and
- wherein the magnetic force acting on the body (30) in the stop position is at most twice the counterforce.

4. Mounting device according to Claim 3, wherein the magnetic force acting on the body (30) in the stop position is at most 1.5 times the counterforce, preferably at most 1.1 times the counterforce.

5. Mounting device according to Claim 3 or 4, wherein the magnetic force acting on the body (30) in the stop position is at least 0.5 times the counterforce, preferably at least equal to the absolute value of the counterforce.

6. Mounting device according to one of Claims 3 to 5, wherein given the defined alignment of the first connecting element (12) the weight force of the second connecting element (14) and the sensor device (5) connected thereto forms at least a fraction of the counterforce.

7. Mounting device according to one of Claims 3 to 6, in which the resilient contact element(s) (49) are prestressed by a prestressing force, wherein the connecting elements (12, 14) and the resilient contact element(s) (49) define a contact position in which the contact element(s) (49) make mechanical contact with the contact surface(s) (28) during the mounting of the sensor device (5) on the coordinate measuring machine (11), such that only the prestressing force is exerted on the contact surface(s) (28), but not an additional spring force produced by deflection of the contact element(s) (49), and wherein the magnetic force acting on the body (30) is smaller in the contact position than the absolute value of the counterforce including the prestressing force.

8. Mounting device according to one of Claims 3 to 7, wherein the clamping device (24, 25, 26, 46) can be actuated in the stop position.

9. Mounting device according to one of Claims 1 to 8, wherein the mounting device has a securing device (16) for securing the connection of the connecting elements (12, 14) against inadvertent disconnection, in particular a locking means, and wherein the securing device (16) can be actuated in the stop position.

10. Mounting device according to one of Claims 1 to 9, wherein in the stop position there is a spacing between the permanent magnet(s) (42) and the body (30).

11. Mounting device according to the preceding claim, having at least two different sensor devices (5) which can optionally be connected to the first connecting element (12) at which there is respectively provided an embodiment of the second connecting element (14), and for which a counterforce of different magnitude is to be overcome in the respective stop position in order to reach and/or retain the stop position, the second connecting elements (14) of the sensor devices (5) being designed in such a way that the spacing between the permanent magnet(s) (42) and the body (30) is of different magnitude such that the magnetic force in the stop position is correspondingly adapted in this way to the counterforce of different magnitude.

12. Mounting device according to one of Claims 1 to 11, wherein apart from the permanent magnet (42) or the permanent magnets the magnetic device (40) has no further source of magnetic force which is designed to influence the magnetic force of the magnetic device (40) in the stop position.

## Revendications

1. Dispositif de montage (10) servant au montage d'un dispositif de détection (5) sur un appareil de mesure de coordonnées (11), le dispositif de montage présentant un premier élément de liaison (12) à disposer sur l'appareil de mesure de coordonnées (11) et un deuxième élément de liaison (14) à disposer sur le dispositif de détection (5),
sachant que les éléments de liaison (12, 14) coopèrent l'un avec l'autre lorsque le dispositif de détection (5) est à l'état monté et forment une liaison entre une partie (8) d'un appareil de mesure de coordonnées (11) et le dispositif de détection (5),
sachant qu'un des éléments de liaison (12) présente un dispositif magnétique (40) avec au moins un aimant permanent (42) servant à générer une force magnétique et l'autre élément de liaison (14) présente un corps (30) pouvant être attiré par la force magnétique du dispositif magnétique (40),
sachant qu'une position de butée est définie par les éléments de liaison (12, 14), dans laquelle les éléments de liaison (12, 14) se touchent les uns les autres pendant le montage du dispositif de détection (5) sur l'appareil de mesure de coordonnées (11) et dans laquelle la force magnétique de l'aimant permanent (42) ou des aimants permanents agit entre les éléments de liaison (12, 14) de sorte à faciliter au moins la conservation de la position de butée,
sachant qu'au moins un des éléments de liaison (12) présente un ou plusieurs éléments de contact élastiques (49), qui coopèrent pendant le fonctionnement de l'appareil de mesure de coordonnées (11) avec au moins une surface de contact (28) sur l'autre élément de liaison (14) et forment un contact électrique entre les éléments de liaison (12,14) et
sachant qu'une force ressort du ou des éléments de contact élastiques (49) forme au moins une partie d'une force antagoniste s'opposant au montage qui doit être surmontée pour atteindre et/ ou conserver la position de butée,
**caractérisé en ce que**
le dispositif de montage sert au montage manuel du dispositif de détection (5) sur l'appareil de mesure de coordonnées (11) et
le dispositif de montage présente en sus du dispositif magnétique, un dispositif de serrage (24, 25, 26, 46), qui est conçu pour fixer le dispositif de détection (5) de manière stable sur l'appareil de mesure de coordonnées (11), pendant le fonctionnement de l'appareil de mesure de coordonnées (11),
sachant que le dispositif de serrage (24, 25, 26, 46) est conçu pour appliquer pendant le fonctionnement de l'appareil de mesure de coordonnées (11), une force de retenue, dépassant la force magnétique, avec laquelle les deux éléments de liaison (12, 14) sont pressés l'un contre l'autre.

2. Dispositif de montage selon la revendication 1, sachant que le ou les éléments de contact élastiques (49) sont précontraints par une force de précontrainte, sachant que les éléments de liaison (12, 14) et le ou les éléments de contact élastiques (49) définissent une position de contact, dans laquelle le ou les éléments de contact (49) établissent le contact mécanique avec la (les) surface(s) de contact (28) pendant le montage du dispositif de détection (5) sur l'appareil de mesure de coordonnées (11), de sorte que seule la force de précontrainte est exercée sur la (les) surface(s) de contact (28), mais pas de force ressort supplémentaire générée par la déviation du ou des éléments de contact (49) et sachant que la force magnétique agissant sur le corps (30) dans la position de contact est inférieure à la valeur de la force antagoniste y compris la force de précontrainte.

3. Dispositif de montage selon l'une quelconque des revendications 1 à 2,
sachant que le dispositif de montage est conçu de telle sorte que dans une orientation du premier élément de liaison (12) définie et adaptée au montage, la force antagoniste s'opposant au montage doit être surmontée pour atteindre et/ou conserver la position de butée,
sachant que la force magnétique agissant sur le corps (30) dans la position de butée est égale au maximum à deux fois la force antagoniste.

4. Dispositif de montage selon la revendication 3, sachant que la force magnétique agissant sur le corps (30) dans la position de butée est égale au maximum à 1,5 fois la force antagoniste, de préférence au maximum à 1,1 fois la force antagoniste.

5. Dispositif de montage selon la revendication 3 ou 4, sachant que la force magnétique agissant sur le corps (30) dans la position de butée est égale au moins à 0,5 fois la force antagoniste, est de préférence au moins égale à la valeur de la force antagoniste.

6. Dispositif de montage selon l'une quelconque des revendications 3 à 5, sachant que lorsque l'orientation du premier élément de liaison (12) est définie, le poids du deuxième élément de liaison (14) et du dispositif de détection (5) qui y est relié forme au moins une partie de la force antagoniste.

7. Dispositif de montage selon l'une quelconque des revendications 3 à 6, sachant que le ou les éléments de contact élastiques (49) sont précontraints par une force de précontrainte, sachant que les éléments de liaison (12, 14) et le ou les éléments de contact élastiques (49) définissent une position de contact, dans laquelle le ou les éléments de contact (49) établissent le contact mécanique avec la (les) surface(s) de contact (28) pendant le montage du dispositif de détection (5) sur l'appareil de mesure de coordonnées (11), de sorte que seule la force de précontrainte est exercée sur la (les) surface(s) de contact (28), mais pas de force ressort supplémentaire générée par la déviation du ou des éléments de contact (49) et sachant que la force magnétique agissant sur le corps (30) dans la position de contact est inférieure à la valeur de la force antagoniste y compris la force de précontrainte.

8. Dispositif de montage selon l'une quelconque des revendications 3 à 7, sachant que le dispositif de serrage (24, 25, 26, 46) peut être actionné dans la position de butée.

9. Dispositif de montage selon l'une quelconque des revendications 1 à 8, sachant que le dispositif de montage présente un dispositif de sécurité (16) servant à protéger la liaison des éléments de liaison (12, 14) contre une désolidarisation involontaire, en particulier un verrouillage, et sachant que le dispositif de sécurité (16) peut être actionné dans la position de butée.

10. Dispositif de montage selon l'une quelconque des revendications 1 à 9, sachant qu'il y a une distance entre le ou les aimants permanents (42) et le corps (30) dans la position de butée.

11. Dispositif de montage selon la revendication précédente avec au moins deux dispositifs de détection (5) différents, qui peuvent être reliés au choix au premier élément de liaison (12) au niveau desquels respectivement un mode de réalisation du deuxième élément de liaison (14) est prévu et pour lesquels dans la position de butée respective, une force antagoniste de grandeur différente doit être surmontée pour atteindre et/ou conserver la position de butée, sachant que les deuxièmes éléments de liaison (14) du dispositif de détection (5) sont réalisés de telle sorte que la distance entre le ou les aimants permanents (42) et le corps (30) est de grandeur différente si bien que dans la position de butée, la force magnétique est ainsi adaptée en fonction de la force antagoniste de grandeur différente.

12. Dispositif de montage selon l'une quelconque des revendications 1 à 11, sachant que, à part l'aimant permanent (42) ou les aimants permanents, le dispositif magnétique (40) ne présente aucune autre source de force magnétique réalisée pour influencer la force magnétique du dispositif magnétique (40) dans la position de butée.
